## Europäisches Patentamt
## European Patent Office
## Office européen des brevets

(11) Veröffentlichungsnummer: **0 281 748**
**A2**

# EUROPÄISCHE PATENTANMELDUNG

(21) Anmeldenummer: **88101122.5**

(22) Anmeldetag: **26.01.88**

(51) Int. Cl.⁴: **G01V 9/04**

(30) Priorität: **12.03.87 DE 3707986**

(43) Veröffentlichungstag der Anmeldung:
**14.09.88 Patentblatt 88/37**

(84) Benannte Vertragsstaaten:
**BE CH DE FR GB IT LI NL**

(71) Anmelder: **Erwin Sick GmbH Optik-Elektronik**
**Sebastian-Kneipp-Strasse 1**
**D-7808 Waldkirch(DE)**

(72) Erfinder: **Meinert, Thomas**
**Robert-Koch-Strasse 3**
**D-7830 Emmendingen(DE)**

(74) Vertreter: **Dipl.-Phys.Dr. Manitz Dipl.-Ing.,**
**Dipl.-Wirtsch. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22(DE)**

(54) **Reflexionslichtschranke.**

(57) Eine Reflexionslichtschranke weist einen Lichtsender-Empfänger (14) auf, der zwei benachbarte Frontlinsen (18, 19) für das Sende-bzw. das Empfangslicht besitzt. Am Ende der Lichtschrankenstrecke ist ein Tripelreflektor (13') angeordnet, der aus einer Vielzahl von Einzeltripeln (11) besteht. Erfindungsgemäß ist die Länge der Grenzlinie (12) zwischen den Pupillen gekrümmt, so daß bei Anordnung des Tripelreflektors (13, 13') im Nahbereich des Lichtsender-Empfängers (14) die aufgrund des Tripelversatzes (V) in die Empfangspupille (16) gelangende Lichtmenge im wesentlichen der Lichtmenge bei im Fernbereich angeordneten Tripelreflektor (13) entspricht.

# FIG. 2

## Reflexionslichtschranke

Die Erfindung betrifft eine Reflexionslichtschranke mit einem Lichtsender-Empfänger, der zwei benachbarte Frontlinsen für das Sende-bzw. das Empfangslicht aufweist, sowie mit einem am Ende der Lichtschrankenstrecke angeordneten Tripelreflektor mit einer Vielzahl von Einzeltripeln, wobei die Pupillen der Frontlinsen zumindest annähernd aneinandergrenzen.

Für Reflexionslichtschranken, bei denen Sender und Empfänger in einem gemeinsamen Gehäuse angeordnet sind, bieten sich zwei prinzipielle Lösungsmöglichkeiten an.

Zum einen wird das strenge Autokollimationsprinzip angewandt, bei dem Sender und Empfänger eine gemeinsame Pupille besitzen und die Trennung von Sende-und Empfangskanal durch einen Teilespiegel erfolgt, welcher zwischen dem Sender bzw. Empfänger einerseits und dem Objektiv andererseits vorgesehen ist.

Weiter ist es bereits bekannt, eine Reflexionslichtschranke mit zwei getrennten, aber unmittelbar nebeneinanderliegenden Pupillen für Sender und Empfänger zu verwenden, wobei der Umstand ausgenutzt wird, daß die normalerweise bei Lichtschranken verwendeten Retroreflektoren, die z.B. aus vielen Tripelspiegelsegmenten oder Reflexfolien bestehen, das auffallende Licht nicht in idealer Weise in sich zurückreflektieren, sondern innerhalb eines mehr oder weniger großen Streuwinkels. Bei zwei eng benachbarten Pupillen wird aufgrund dieser nicht idealen Eigenschaft der Retroreflektoren ein Teil des ausgesandten Lichtes in den Empfänger reflektiert.

Problematisch sind beide Arten von bekannten Reflexionslichtschranken im Nahbereich, wobei ungestörtem Lichtschrankenweg entweder ein sehr starkes Empfängersignal (Autokollimationslichtschranke) oder ein sehr geringes Empfangssignal (mit zwei Frontlinsen arbeitende Lichtschranke) erzielt wird.

Das Ziel der vorliegenden Erfindung besteht darin, eine Reflexionslichtschranke der eingangs genannten Gattung zu schaffen, bei der im Falle eines ungestörten Lichtschrankenweges und bei im Nahbereich angeordnetem Retroreflektor ein Empfangssignal erhalten wird, welches im wesentlichen gleich groß wie das bei im Fernbereich angeordnetem Retroreflektor erhaltene Empfangssignal ist.

Zur Lösung dieser Aufgabe sieht die Erfindung vor, daß die Basisgröße der Einzeltripel und/oder die Länge und Form der Grenzlinie zwischen der Sende-und der Empfangspupille so gewählt ist bzw. sind, daß bei Anordnung des Tripelreflektors im Nahbereich des Lichtsender-Empfängers die aufgrund des Tripelversatzes in die Empfangspupille gelangende Lichtmenge im wesentlichen der Lichtmenge bei im Fernbereich angeordneten Tripelreflektor entspricht.

Der Erfindungsgedanke ist also darin zu sehen, daß für die Erzeugung eines einen bestimmten Schwellenwert überschreitenden Empfangssignals bei im Nahbereich angeordnetem Tripelreflektor der bei jedem Einzeltripelspiegel vorhandene Strahlversatz bewußt ausgenutzt wird, um einen Teil des Sendelichtes auf optisch exakte Weise ohne die Ausnutzung von nicht idealen Streueffekten in den Empfänger zu lenken. Um diesen grundsätzlich schon bei den bekannten Tripelreflektoren vorhandenen Effekt in der Weise zu nutzen, daß das Empfangssignal bei im Nahbereich angeordnetem Reflektor annähernd gleich wie bei im Fernbereich angeordnetem Retroreflektor ist, müssen jedoch besondere Maßnahmen ergriffen werden, die entweder in einer Vergrößerung der Basis der Einzeltripel oder in einer durch geeignete bauliche Ausbildung bewirkten Verlängerung und Formgebung der Grenzlinie zwischen Sendepupille und Empfangspupille bestehen können.

Die erfindungsgemäß durchzuführenden baulichen Maßnahmen bestehen also in einer Vergrößerung der Einzeltripel und/oder einer Verlängerung und Krümmung der Grenzlinie zwischen Sende-und Empfangspupille. Um handelsübliche Tripelspiegel verwenden zu können, ist es erfindungsgemäß bevorzugt, die Grenzlinie zwischen der Sendepupille und der Empfangspupille in gekrümmter Form auszuführen, was auf besonders einfache Weise dadurch geschehen kann, daß die Sendepupille durch eine gekrümmte insbesondere kreisförmige Grenzlinie von der Empfangspupille getrennt ist. Insbesondere soll erfindungsgemäß die kreisförmige Sendepupille in einem komplementären kreisförmigen Ausschnitt der Eingangspupille angeordnet sein. Dabei ist zweckmäßig auch die Empfangspupille kreisförmig ausgebildet. Da ein Einzeltripelspiegelmuster im allgemeinen eine orthogonale Anordnung besitzt, liegt eine gekrümmte Grenzlinie nicht parallel zu den Tripelreihen, wodurch an der Grenzlinie statistisch immer wieder einzelne Tripelspiegel so angeordnet sind, daß durch den Tripelversatz Licht direkt von der Sendein die Empfangspupille gelangt. Die Krümmung der Grenzlinie ist derart, daß zumindest ein wesentlicher Teil der Einzeltripelspiegel die Grenzlinie überbrückt, und zwar weitgehend unabhängig von der Justierung des Tripelreflektors relativ zum Lichtsender-Empfänger, stellt also ein wesentliches Merkmal der Erfindung dar, wobei sich zusätzlich günstig die durch die Krümmung bedingte, größere Länge der Grenzlinie auswirkt.

Besonders vorteilhafte Dimensionierungen ergeben sich aus den Patentansprüchen 5 bis 7.

Eine weitere vorteilhafte Ausgestaltung der Erfindung ist durch den Patentanspruch 8 gekennzeichnet.

Da bei einer Lichtschranke die Feldwinkel für Sender und Empfänger (Bestrahlungs-und Empfangskeule) im allgemeinen klein gehalten werden, muß für die unterschiedlichen Zonen des Empfangsobjektivs der Öffnungsfehler klein gehalten werden.
Für das Sendeobjektiv gilt gleiches mit der Einschränkung, daß hier eine Korrektur des Öffnungsfehlers im Bereich der Randzone des Objektives ausreichend ist. Mit diesen Maßnahmen ist der Wirkungsgrad der verchiedenen Trennlinensegmente für das System annähernd gleich zu halten. Aus diesem Grunde kommt der Ausführung nach Anspruch 9 eine besondere Bedeutung zu.

Die Erfindung wird im folgenden beispielsweise anhand der Zeichnung beschrieben; in dieser zeigt:

Fig. 1 eine schematische Seitenansicht einer erfindungsgemäßen Reflexionslichtschranke,

Fig. 2 eine schematische Seitenansicht einer weiteren vorteilhaften Ausführungsform einer erfindungsgemäßen Reflexionslichtschranke und

Fig. 3 eine schematische Vorderansicht des Gegenstandes der Fig. 2.

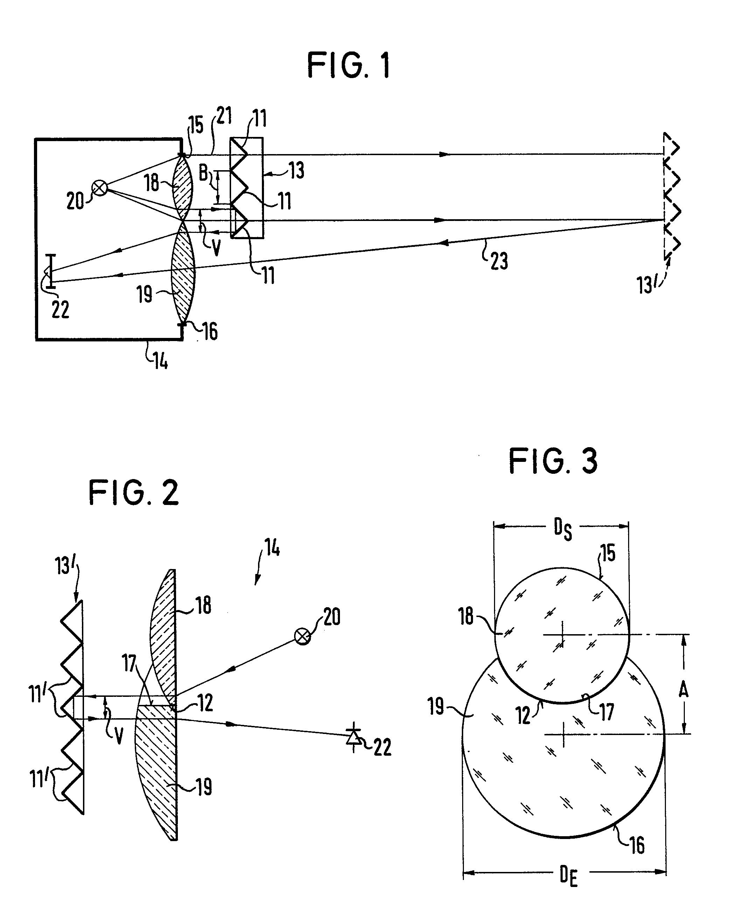

Nach Fig. 1 ist in einem Lichtsender-Empfänger 14 eine Lichtquelle 20 angeordnet, die über einen nicht dargestellten Kondensor und eine Blende einen eine Frontlinse 18 mit einer Sendepupille 15 ausleuchtet und so ein paralleles Sendelichtbündel 21 erzeugt. Angrenzend an die Frontlinse 18 für das Sendelicht ist eine Frontlinse 19 für das Empfangslicht im Lichtsender-Empfänger 14 angeordnet, hinter der sich in der Brennebene ein Fotoempfänger 22 befindet.

Wird bei einer derartigen Reflexionslichtschranke ein Tripelreflektor 13' in der in Fig. 1 gestrichelt angedeuteten Weise im Fernbereich des Lichtsender-Empfängers 14 angeordnet, so wird ein Teil des auf den Reflektor 13' auftreffenden Sendelichts innerhalb einer engen Reflexionskeule gestreut. Auf diese Weise kann ein beispielsweise bei 23 angedeuteter Streulichtstrahl durch die eine Pupille 16 aufweisende Frontlinse 19 auf den Fotoempfänger 22 gelangen und dort ein entsprechendes elektrisches Empfangssignal erzeugen.

Würde der übliche Tripelreflektor 13' im Nahbereich des Lichtsender-Empfängers 14 angeordnet, so würde nur noch eine so geringe Lichtmenge in den Empfangsteil eintreten, daß eine vorbestimmte Schaltschwelle nicht mehr überschritten werden könnte.

Aus diesem Grunde weist ein erfindungsgemäßer Tripelreflektor 13 Einzeltripelspiegel 11 mit verbreiterter Basis B auf, wodurch der Tripelversatz V derart erhöht wird, daß auch bei Anordnung des Tripelreflektors 13 im Nahbereich des Lichtsender-Empfängers 14 noch eine solche Lichtmenge in die Frontlinse 19 und damit auf den Fotoempfänger 22 gelangt, daß das Empfangssignal sich bei im Nahbereich angeordnetem Tripelreflektor 13 nicht wesentlich von dem Empfangssignal unterscheidet, welches bei Anordnung des Tripelreflektor 13 im Fernbereich erzeugt wird. Die flächenmäßige Ausdehnung des Tripelreflektors 13 muß erfindungsgemäß so sein, daß er sich zumindest soweit auch über die Frontlinse 19 bzw. die Empfangspupille 16 erstreckt, daß das am Rande der Sendepupille 15 austretende Licht über Einzeltripelspiegel 11 in die Frontlinse 19 gelangen kann.

Bei dem Ausführungsbeispiel nach den Fig. 2 und 3 ist ein handelüblicher Tripelreflektor 13' mit relativ kleinen Einzeltripelspiegeln 11' verwendet, so daß der Tripelversatz V allein nicht ausreichen würde, um den Reflexionslichtverlust bei Anordnung des Tripelreflektors im Nahbereich des Lichtsender-Empfängers auszugleichen.

Aus diesem Grunde weist bei dem Ausführungsbeispiel nach den Fig. 2 und 3 die einen größeren Durchmesser aufweisende Frontlinse 19 für das Empfangslicht mit der Empfangspupille 16 einen kreisförmigen Ausschnitt 17 auf, in welchem die einen kleineren Durchmesser aufweisende Frontlinse 18 für das Sendelicht angeordnet ist, so daß zwischen den ineinanderpassenden Sende-und Empfangspupillen 15, 16 eine kreisausschnittförmige Grenzlinie 12 vorliegt. Hierdurch wird die Grenzlinie zwischen der Sendepupille 15 und der Empfangspupille 16 erheblich verlängert, was zur Folge hat, daß aufgrund des Tripelversatzes V von einem größeren Bereich des Tripelreflektors 13' versetzte Lichtstrahlen in das Frontobjektiv 19 bzw. die Empfangspupille 16 gelangt. Bei Anordnung des Tripelreflektors 13' im Nahbereich des LichtsenderEmpfängers 14 wird also trotz der relativ kleinen Ausbildung der Einzeltripelspiegeln 11' eine durch den Tripelversatz V bedingte ausreichende Lichtmenge in den Empfangsteil des Lichtsender-Empfängers 14 gelenkt.

Der Basisabstand A der Sendepupille 15 von der Empfangspupille 16 beträgt ca. die Hälfte der Empfangsapertur $D_E$ der Empfangspupille, während das Verhältnis des Durchmessers $D_s$ der Empfangspupille zum Durchmesser $D_E$ der Empfangspupille 16 zweckmäßigerweise etwa 1:1,5 beträgt.

Die Verlängerung der Grenzlinie 12 zwischen den Pupillen 15, 16 ist gegenüber der Verwendung vergrößerter Einzeltripelspiegel bevorzugt, weil in letzterem Fall eine relativ genaue Ausrichtung von Retroreflektor und Lichtsender-Empfänger erforderlich wäre. Befinden sich jedoch zahlreiche Einzeltripelspiegel im Bereich der gekrümmt ausgebildeten Grenzlinie, so mitteln sich etwaige ungünstige Anordnungen einzelner Einzeltripelspiegel heraus, so daß der Retroreflektor ohne besondere Justiererfordernisse angeordnet werden kann.

Entscheidend für eine große Empfindlichkeit bei kleinem Abstand des Tripelreflektors vom Lichtsender-Empfänger sind Länge und Radius der Grenzlinie 12. Wird die Grenzlinie 12 durch den kleineren der beiden Radien (Sendepupille 15) beschrieben, so ergibt sich neben der vorteilhaften Ausgestaltung der Grenzlinie 12 ein optimaler Öffnungswinkel fur den Sender bei vergleichsweise geringen Einbußen für die Empfängerapertur.

Die anhand der Fig. 2 und 3 beschriebene Anordnung weist folgende Vorteile auf:
Optimale Ausnutzung der Abstrahlkeule des Senders. Hohe Empfindlichkeit auch bei großen Reichweiten durch große Empfängerapertur.
Verbesserte Empfindlichkeit bei kleinen Abständen Reflektor-Lichtsender-Empfänger durch gekrümmte Grenzlinie und dadurch bessere Ausnutzung des Tripelversatzes bei kleinen Streuwinkeln des Reflektors.
Kleinere Empfindlichkeit gegenüber dem diffus reflektierenden Materialien durch größeren Basisabstand.

### Ansprüche

1. Reflexionslichtschranke mit einem Lichtsender-Empfänger, der zwei benachbarte Frontlinsen für das Sende-bzw. das Empfangslicht aufweist, sowie mit einem am Ende der Lichtschrankenstrecke angeordneten Tripelreflektor mit einer Vielzahl von Einzeltripeln, wobei die Pupillen der Frontlinsen zumindest annähernd aneinandergrenzen, dadurch **gekennzeichnet,** daß die Basisgröße (B) der Einzeltripel (11) und/oder die Länge und Formgebung der Grenzlinie (12) zwischen der Sende-und der Empfangspupille so gewählt ist bzw. sind, daß bei Anordnung des Tripelreflektors (13) im Nahbereich des Lichtsender-Empfängers (14) die aufgrund des Tripelversatzes (V) in die Empfangspupille (16) gelangende Lichtmenge im wesentlichen der Lichtmenge bei im Fernbereich angeordneten Tripelreflektor (13) entspricht.

2. Reflexionslichtschranke nach Anspruch 1, dadurch **gekennzeichnet,** daß die Sendepupille (15) durch eine gekrümmte Grenzlinie (12) von der Empfangspupille (16) getrennt ist.

3. Reflexionslichtschranke nach Anspruch 2, dadurch **gekennzeichnet,** daß die kreisförmige Sendepupille (15) in einem zu ihr komplementären kreisförmigen Ausschnitt (17) der Empfangspupille (16) angeordnet ist.

4. Reflexionslichtschranke nach Anspruch 3, dadurch **gekennzeichnet,** daß auch die Empfangspupille (16) kreisförmig ausgebildet ist.

5. Reflexionslichtschranke nach Anspruch 3 oder 4, dadurch **gekennzeichnet,** daß der kreisförmige Ausschnitt (17) sich über einen Winkel von 130 bis 170°, insbesondere 140 bis 160° und vorzugsweise etwa 150° erstreckt.

6. Reflexionslichtschranke nach einem der Ansprüche 3 bis 5, dadurch **gekennzeichnet,** daß die Durchmesser der Sendepupille (15) und der Empfangspupille (16) im Verhältnis von 1:1,3 bis 1:1,7, insbesondere 1:1,4 bis 1:1,6 und vorzugsweise etwa 1:1,5 stehen.

7. Reflexionslichtschranke nach einem der Ansprüche 3 bis 6, dadurch **gekennzeichnet,** daß der Basisabstand der Sendepupille (15) zur Empfangspupille (16) 0,3 bis 0,7, insbesondere 0,4 bis 0,6 und vorzugsweise etwa 0,5 der Empfangsapertur beträgt.

8. Reflexionslichtschranke nach einem der Ansprüche 2 bis 7, dadurch **gekennzeichnet,** daß die Trennlinie (12) zwischen der Sendepupille (15) und der Empfangspupille (16) durch den kleineren der beiden Radien von Sende-oder Empfangspupille (15, 16) beschrieben wird.

9. Reflexionslichtschranke nach einem der vorhergehenden Ansprüche, dadurch **gekennzeichnet,** daß der Öffnungsfehler von Sende-und Empfangs-Frontlinse (18, 19) über die gesamte Öffnung weitgehend korrigiert ist.

# FIG. 1

# FIG. 2

# FIG. 3